## Europäisches Patentamt
## European Patent Office
## Office européen des brevets

(19)

(11) Numéro de publication: **0 062 294**
**B1**

---

(12) **FASCICULE DE BREVET EUROPEEN**

(45) Date de publication du fascicule du brevet:
03.07.85

(51) Int. Cl.⁴: **H 04 M 3/12,** H 04 M 3/30, H 04 Q 11/04

(21) Numéro de dépôt: **82102708.3**

(22) Date de dépôt: **31.03.82**

(54) **Dispositif de secours de terminal d'abonné.**

---

(30) Priorité: **03.04.81 FR 8106811**

(43) Date de publication de la demande:
**13.10.82 Bulletin 82/41**

(45) Mention de la délivrance du brevet:
**03.07.85 Bulletin 85/27**

(84) Etats contractants désignés:
**BE CH DE FR GB IT LI NL SE**

(56) Documents cités:
**PATENTS ABSTRACTS OF JAPAN, volume 4, no. 170, 22 novembre 1980 page 652E35**
**SUPPLEMENT TO ELECTRICAL COMMUNICATION, volume 55, no. 2, 1980 LONDRES (GB) "Network terminals and control elements", pages 24/30**

(73) Titulaire: **COMPAGNIE INDUSTRIELLE DES TELECOMMUNICATIONS CIT-ALCATEL S.A. dite:, 12, rue de la Baume, F-75008 Paris (FR)**

(72) Inventeur: **Kemler, Marc, 1, rue Morte Bouteille, F-78140 Velizy (FR)**
Inventeur: **Coppens, Christian, 60, rue de Villacoublay, F-78140 Velizy (FR)**
Inventeur: **Billot, Michel, 10, rue de l'Etang, F-78000 Versailles (FR)**

(74) Mandataire: **Weinmiller, Jürgen et al, Zeppelinstrasse 63, D-8000 München 80 (DE)**

---

ACTORUM AG

## Description

L'invention est applicable dans les télécommunications, en particulier dans les centraux téléphoniques. Le terminal d'abonné est l'équipement individuel d'une ligne téléphonique. Il comporte les moyens d'alimentation, de sonnerie, d'adaptation de la ligne, les moyens de supervision, et les moyens de renvoi aux essais. Le terminal est relié à la ligne au niveau du répartiteur d'entrée, et aux organes communs au niveau d'un répartiteur interne qui dépend du type de l'autocommutateur. Les terminaux sont en général implantés par 4 ou 8 sur des cartes de circuits imprimés.

Une panne au niveau de la carte prive de service une ligne ou toutes les lignes raccordées à cette carte, mais compte tenu du fait que le coût de l'ensemble des terminaux est élevé, ceux-ci ne sont pas dupliqués. Ils sont essayés quotidiennement, et les pannes détectées nécessitent une intervention.

Or, les progrès technologiques ont été tels que l'on exige une disponibilité pratiquement permanente des services et un nombre d'interventions par an très faible pour l'ensemble d'un central. Pour réduire le nombre d'interventions dues aux terminaux, il suffit d'introduire un terminal de secours pour plusieurs terminaux. Le problème à résoudre est alors d'une part la détection de panne et la commande de basculement d'un terminal sur un terminal de secours et d'autre part de disposer des relais et des points de sorties nécessaires sur les cartes de terminaux.

Or, les cartes et leurs connecteurs sont chargés, et la diminution du nombre de terminaux par carte ou l'utilisation de moyens additonnnels introduirait des coûts prohibitifs.

L'invention concerne donc un dispositif de secours de terminal d'abonné dans un système où les terminaux sont organisés en unités de terminaux et sont reliés aux lignes des abonnés par l'intermédiaire de paires de contacts de relais de renvoi aux essais, lesdites paires de contact permettant également de relier les lignes d'abonnés à un bus d'essai de ligne, et les terminaux à un bus d'essai de joncteurs, un dispositif de secours comportant une paire de contacts et pouvant être relié à une ligne d'abonné dont le terminal est en panne par l'intermédiaire du bus d'essai de ligne et de la paire de contacts de renvoi aux essais associée au terminal en panne, le dispositif de secours pouvant être relié par sa paire de contacts au bus d'essai de joncteur.

On connaît par le document JP-A-55 115 786 un dispositif de secours de ce type. Selon ce document, n lignes d'abonnés sont reliées à n terminaux d'abonnés et il y a un terminal de secours. Une unité d'essai est reliée aux lignes d'abonnés par un bus de ligne et aux terminaux par un bus de joncteur. Dans l'unité d'essai, un contact permet de relier le bus de ligne soit à des moyens d'essais de ligne, soit à l'entrée du terminal de secours; celui-ci n'est pas relié à une ligne d'abonné, si un terminal est en panne. Le terminal de secours est donc relié par le bus de ligne à la ligne d'abonné dont le terminal est en panne, et il n'est plus possible d'effectuer des essais de ligne d'abonné aussi longtemps que l'abonné dont le terminal est en panne est en conversation. Lorsque le nombre n d'abonnés est très grand, cette impossibilité de procéder à des essais de lignes d'abonnés, lorsque le terminal de secours est utilisé, est très génante.

L'invention a pour but, lorsqu'un terminal est en panne, de permettre de procéder à des essais sur la plus grande partie d'un ensemble de lignes d'abonnés, sans augmenter der manière prohibitive le coût de l'installation de l'ensemble des terminaux.

Ce but est atteint selon l'invention par un dispositif tel que spécifié ci-dessus, qui est en outre caractérisé par le fait que le dispositif de secours comporte une unité de terminaux de secours pour un certain nombre d'unités de terminaux, l'unité de terminaux de secours étant munie de relais de renvoi aux essais comportant des paires de contacts, et un circuit d'isolement relié au bus d'essai de ligne, au bus d'essai de joncteur et aux paires de contacts des unités de terminaux et de l'unité de terminaux de secours, et permettant de relier d'une part l'unité de terminaux de secours soit aux bus d'essai de ligne et de joncteur, soit aux lignes d'abonnés d'une unité de terminaux présentant un défaut, et d'autre part les unités de terminaux aux bus d'essai de ligne et de joncteur.

L'invention va être précisée par la description qui va suivre d'un mode préféré de réalisation de l'invention, donné à titre d'exemple non limitatif, en référence au dessin annexé dans lequel:

– La figure 1 représente un schéma d'un dispositif de secours de terminal d'abonnés selon l'invention.

– La figure 2 est un schéma général d'un type d'unité de terminaux de la figure 1.

– La figure 3 est un exemple de disposition des organes dans un central temporel auquel est appliquée l'invention.

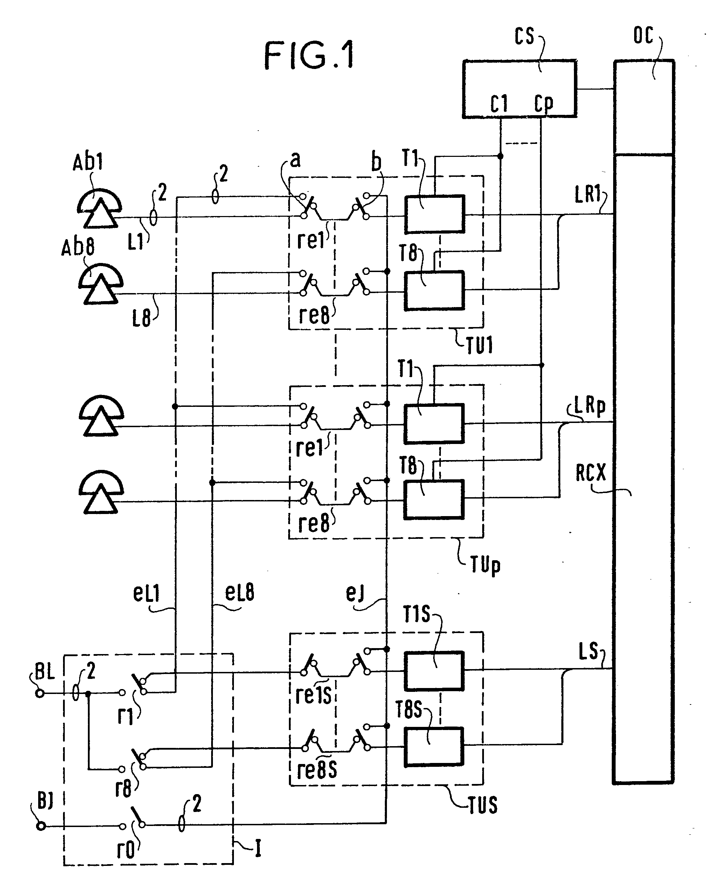

Cette application de l'invention concerne un central téléphonique dans lequel les terminaux de lignes d'abonnés sont groupés en unités de terminaux TU ayant des parties en commun, par exemple les moyens de supervision et les liaisons de renvoi aux essais. Dans la figure 1 on n'a représenté que les parties du central utiles à la compréhension de l'invention:

– Un ensemble d'organes de commande OC
– Un réseau de connexion RCX
– Des unités de terminaux TU1 à TUp, TUS
– Un circuit de commande de mise en service du secours CS constitué par un dispositif de marquage connu
– Un circuit d'isolement des liaisons de renvoi aux essais I

Les unités de terminaux TU1, TUp, TUS sont reliées au réseau de connexion RCX par des lignes LR1 à LRp, LS. Dans le cas d'un central de type temporel, les lignes sont des lignes multiplex qui peuvent être communes à plusieurs unités de terminaux.

Chaque terminal d'abonné T1 à T8 d'une unité de terminaux est relié à une ligne d'abonné L1 à L8 à travers les deux paires de contacts re1 à re8 d'un relais de renvoi aux essais (RE1 à RE8) du terminal. L'une des paires de contacts a renvoie par une ligne de renvoi eL1 à eL8, la ligne d'abonné vers un robot d'essai de lignes REL connecté à un bus d'essai de lignes BL. De même l'autre paire de contacts b permet par une ligne de renvoi eJ de relier le terminal à un robot d'essai de joncteurs REJ connecté à un bus d'essai de joncteur BJ.

On dispose d'une unité de terminaux de secours TUS constituée de terminaux de secours T1S à T8S identiques aux terminaux d'anbonnés, sur laquelle on bascule, en cas de panne d'un terminal quelconque, l'ensemble des lignes d'abonnés qui étaient desservies par l'unité comportant le terminal en panne. Pour cela une ligne de renvoi, eL1 à eL8, est reliée au contact de travail de chacun des relais de renvoi aux essais d'une unité de terminaux. De même une ligne de renvoie eJ est reliée au contact de travail de chacun des relais de renvoi aux essais d'une unité de terminaux.

Ces lignes de renvois eL1 à eL8, eJ sont multipléees sur toutes les unités de terminaux TU1 à TUp et sont connectées également à l'entrée des terminaux de secours de l'unité de terminaux de secours TUS.

Le basculement d'une unité de terminaux est réalisé par la montée de tous les relais de renvoi aux essais RE1 à RE8 de cette unité commandés par le circuit de commande CS. L'identité de l'unité en panne est communiquées au circuit de commande CS par les organes de commande OC. Le circuit de commande CS possède une liaison de commande C1 à Cp vers chacune des unités de terminaux TU1 à TUP. Ces liaisons de commande doivent permettre de faire monter tous les relais de renvoi aux essais de la carte TU quelle que soit la panne, y compris une panne d'alimentation. Elles doivent donc fournir l'alimentation des huit relais.

L'unité de terminaux de secours TUS est identique aux autres unités de terminaux TU1 à TUp et est également reliée au bus d'essai de joncteurs BJ permettant l'essai de ses terminaux.

D'autre part si les bus d'essai de ligne BL était relié en permanence aux lignes de renvoi eL1 à eL8 en cas de basculement dû à une panne, le robot d'essai de lignes REL ne serait pas utilisable, ce qui n'est pas acceptable, un tel robot desservant par exemple 1000 lignes. Il n'est pas non plus acceptable de priver de service, pendant toute la durée des essais qui ont lieu quotidiennement, les lignes raccordées à l'unité de terminaux de secours.

Selon l'invention les abonnés desservis par un même robot d'essai de lignes REL sont répartis en groupes et les bus BL et BJ sont reliés aux terminaux d'un groupe d'abonnés à travers un circuit d'isolement I. De cette manière un basculement dans un groupe permet d'effectuer les essais de lignes des autres groupes. D'autre part les essais dans un groupe sont assez courts pour permettre d'interrompre le basculement soit d'une manière continue pendant les essais, soit par essais successifs portant à chaque fois sur un terminal ou une unité de terminaux.

Le circuit d'isolement I est formé d'au moins un relais d'isolement comportant une paire de contacts travail ro sur le bus d'essai de joncteurs Bj, et une paire de contacts repos-travail r1 à r8 pour chacune des lignes de renvoi eL1 à eL8. Les contacts r1 à r8 sont câblés comme suit:
– Les lames mobiles sont reliées aux lignes de renvoi eL1 à eL8
– Les contacts repos sont reliés chacun à l'entrée d'un terminal de l'unité de terminaux de secours TUS.
– Tous les contacts travail sont reliés au bus d'essai de lignes BL.

De cette manière, pour procéder aux essais d'un groupe d'abonnés il faut commander le relais du circuit d'isolement I affecté à ce groupe.

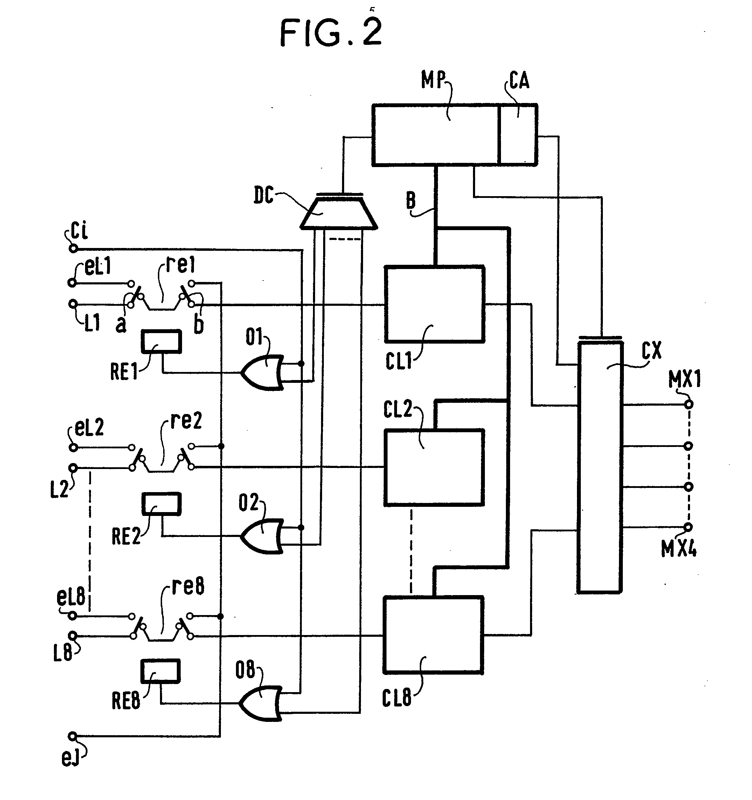

La figure 2 représente une application particulière et non limitative de l'invention à des unités de terminaux commandées par un microprocesseur MP et reliées à un autocommutateur temporel. Cette unité comporte les éléments suivants:

A – Des éléments individuels de chaque terminal:
– des relais de renvoi aux essais RE1 à RE8;
– des circuits de ligne CL1 à CL8 réalisant d'une part les fonctions classiques de joncteurs, par exemple à l'aide d'un circuit connu sous le nom de BORSHT, et d'autre part un circuit de conversion de type CODEC;
– des circuits «OU» 01 à 08 pour la commande des relais de renvoi d'essais: commande globale de secours par le circuit de commande CS (fig. 1) (entrée Ci) ou commande d'essai individuel par le microprocesseur MP, par exemple à l'aide d'un décodeur de numéro de terminal DC. Naturellement les circuits «OU» 01 à 08 doivent permettre le passage du courant d'alimentation des relais, et comporter une amplification sur l'entrée venant du décodeur dans le cas où celui-ci est un circuit logique de faible puissance.

B – Des éléments communs:
– une matrice CX de connexion des circuits de ligne à 4 lignes multiplex MX1 à MX4;"
– le microprocesseur MP de commande des terminaux.

Les circuits de ligne CL1 à CL8 sont reliés aux bus B du microprocesseur (bus de données, bus d'adresse et bus de commande). La matrice CX est commandée également par le microprocesseur MP.

Pour la commande des terminaux, des connexions et des essais, le microprocesseur MP dialogue avec les organes de commande OC (fig. 1) à l'aide d'un canal semaphore porté par l'une des voies temporelles de l'une des lignes multiplex. Pour cela le microprocesseur est relié à une entrée de la matrice CX à travers un circuit d'accès CA.

Le circuit d'accès CA est un circuit connu que l'on trouve dans le commerce et qui permet la supervision des échanges de messages sur un canal sémaphore selon la procédure connue dite «HDLC». Un tel échange de messages entre calculateurs sur liaison multiplex est décrit notamment dans le document FR-A 2 451 141.

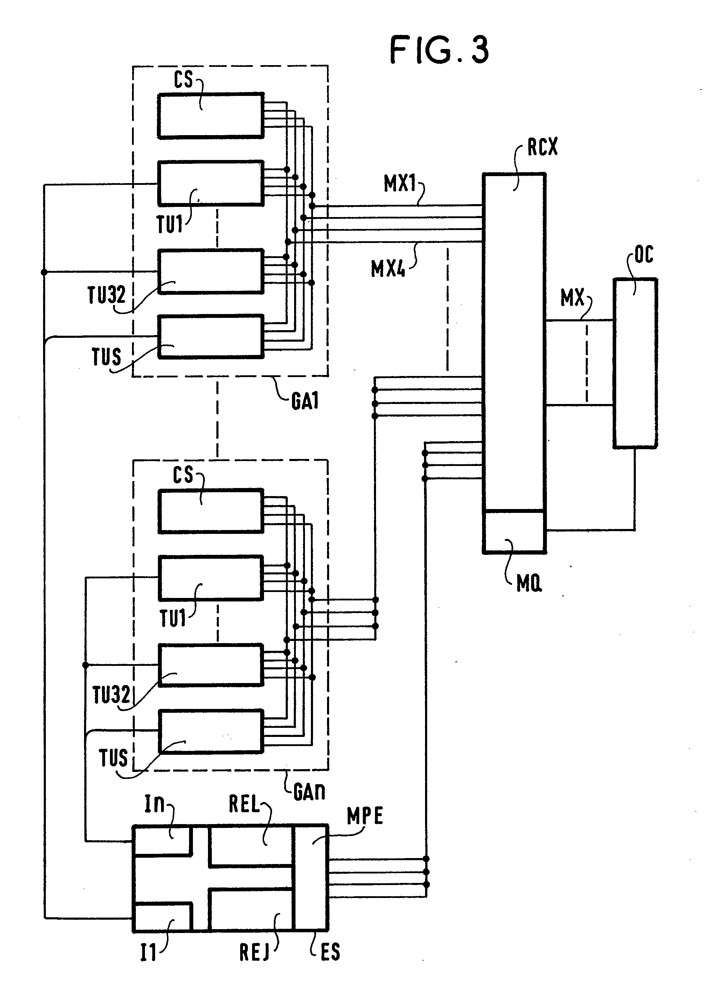

Un exemple de liaison concernant les groupes d'unités de terminaux GA1 à GAn desservis par un même ensemble d'organes d'essais ES est représenté à la figure 3.

L'ensemble Es comporte un robot d'essais de lignes REL et un robot d'essais de joncteurs REJ pilotés par un microprocesseur MPE. L'ensemble ES est relié à chaque groupe d'unités de terminaux GA à travers un circuit d'isolement I1 à In.

Les essais sont commandés par les organes OC, reliés au microprocesseur MPE par un canal sémaphore porté par des lignes multiplex MX reliées au réseau de connexion RCX, et analogues à celui qui relie les microprocesseurs des unités de terminaux.

Cet exemple n'est pas limitatif mais montre une application préférentielle de l'invention en ce qui concerne la localisation des circuits permettant le secours:

— Le circuit de commande CS et l'unité de secours de terminaux TUS affectés à un groupe d'unités de terminaux, GA1 à GAn, sont situés dans l'alvéole (ou l'un des alvéoles) des cartes des unités de terminaux TU1 à TUp

— Les cricuits d'isolement I1 à In sont situés dans l'ensemble d'organes d'essais ES et les relais d'isolement sont commandés par le microprocesseur MPE.

Cette solution nécessite pour le secours des liaisons supplémentaires entre l'ensemble d'organes d'essais ES et les groupes d'unités de terminaux GA, mais évite les intéractions entre logiciel de commutation et logiciel d'essais.

Le circuit de commande CS est de préférence également piloté par un microprocesseur relié aux organes de commandes par le même canal que les microprocesseur des unités de terminaux du même groupe. Le mode de commande est ainsi le même pour tous les microprocesseurs.

Dans cette application le fonctionnement du secours et son intéraction sur les essais sont les suivants:

— Décision de basculement prise par l'ensemble d'organes de commande OC: une unité de terminaux TU est détectée hors service suite à la détection d'une panne par les moyens de maintenance ou de localisation d'avaries, par le robot d'essai de joncteurs REJ, ou par les tests effectués sur les terminaux par le microprocesseur MP sur ordre de l'ensemble d'organes de commande OC.

— Basculement par ordre de l'ensemble d'organes de commande OC au circuit de commande CS, lui indiquant le numéro de l'unité de terminaux mise hors service

— Mise à jour des logiciels de l'ensemble d'organes de commande OC:

Logiciel de traduction: changement des numéros des terminaux affectés aux 8 lignes d'abonnés concernées par le basculement.

— Logiciel d'essais: modification des séquences du robot d'essais de lignes REL et introduction de commandes au circuit de commande CS pour coordonner les essais, au niveau du groupe d'unités de terminaux GA dans lequel a eu lieu le basculement avec les suppressions de basculement nécessaires à l'utilisation du bus d'essai de lignes BL.

## Revendications

1. Dispositif de secours de terminal d'abonné dans un système où les terminaux (T1 à T8) sont organisés en unités de terminaux et sont reliés aux lignes des abonnés par l'intermédiaire de paires de contacts (re1 à re8) de relais de renvoi aux essais (RE1 à RE8), lesdites paires de contacts permettant également de relier les lignes d'abonnés à un bus d'essai de ligne (BL), et les terminaux à un bus d'essai de joncteurs (BJ), un dispositif de secours comportant une paire de contacts (re1s) et pouvant être relié à une ligne d'abonné dont le terminal est en panne par l'intermédiaire du bus d'essai de ligne (BL) et de la paire de contacts de renvoi aux essais associée au terminal en panne, le dispositif de secours pouvant être relié par sa paire de contacts au bus d'essai de joncteur (BJ), caractérisé par le fait que le dispositif de secours comporte une unité de terminaux de secours (TUS) pour un certain nombre d'unités de terminaux (TU1 à TUp), l'unité de terminaux de secours étant munie de relais de renvoi aux essais comportant des paires de contacts (re1s à re8s), et un circuit d'isolement (I) relié au bus d'essai de ligne (BL), au bus d'essai de joncteur (BJ) et aux paires de contacts des unités de terminaux et de l'unité de terminaux de secours, et permettant de relier d'une part l'unité de terminaux de secours (TUS) soit aux bus d'essai de ligne (BL) et de joncteur (BJ) soit aux lignes d'abonnés d'une unité de terminaux présentant un défaut, et d'autre part les unités de terminaux aux bus d'essai de ligne et de joncteur.

2. Dispositif suivant la revendication 1, caractérisé par le fait qu'il comporte un circuit de commande (CS) indépendant des unités de terminaux et capable d'alimenter le relais de renvoi aux essais (RE1) de l'un quelconque des terminaux en panne.

3. Dispositif suivant la revendication 2, caractérisé par le fait que le circuit de commande (CS) possède une liaison de commande (C1 à Cp) par unité de terminaux, permettant d'alimenter simultanément tous les relais de renvoi aux essais (RE1) d'une unité de terminaux, pour basculer sur l'unité de terminaux de secours (TUS) l'ensemble des lignes raccordées à ladite unité de terminaux.

4. Dispositif suivant la revendication 1, caractérisé par le fait qu'au repos le circuit d'isolement (I) relie les terminaux de l'unité de terminaux de secours à deux contacts travail d'une paire de contacts (a) des relais de renvoi aux essais (RE1S à RE8S) des terminaux des unités de terminaux, le changement de position du circuit d'isolement (I) étant commandé par un ensemble d'essais (ES).

5. Dispositif suivant la revendication 2, caractérisé par le fait que chaque relais de renvoi aux essais (RE1 à RE8) est alimenté à travers un circuit «OU» (01 à 08) recevant sur une entrée une commande émise par l'unité de terminaux pour renvoi au essais, et sur une seconde entrée une commande du circuit de commande (CS) pour basculement sur l'unité de terminaux de secours.

6. Dispositif suivant la revendication 1 dans lequel les unités de terminaux sont organisées en groupes d'unités de terminaux (GA1 à GAn), caractérisé par le fait que chaque groupe comporte une unité de terminaux de secours (TUS) et un circuit de commande (CS).

7. Dispositif suivant la revendication 6 dans lequel un ensemble d'essais (ES) comporte un robot d'essais de lignes (REL), un robot d'essais de joncteurs (REJ) et un organe de pilotage (MPE), caractérisé par le fait qu'il comporte un circuit d'isolement (I1 à In) pour chaque groupe d'unités de terminaux (GA1 à GAn), tous les circuits d'isolement étant commandés par l'organe de pilotage (MPE).

**Patentansprüche**

1. Reserveeinrichtung für Teilnehmerendschaltungen in einem System, in dem die Teilnehmerendschaltungen (T1 bis T8) in Teilnehmerendschaltungseinheiten organisiert und an die Teilnehmerleitungen über Kontaktpaare (re1 bis re8) von Relais (RE1 bis RE8) für die Umschaltung auf Testbetrieb angeschlossen sind, wobei diese Kontaktpaare ausserdem die Teilnehmerleitungen an eine Leitungstestschiene (BL) und die Endschaltungen an eine Anschlusstestschiene (BJ) anzuschliessen erlauben, wobei eine Reserveeinrichtung ein Kontaktpaar (re1s) enthält und an eine Teilnehmerleitung, deren Endschaltung gestört ist, über die Leitungstestschiene (BL) und das der gestörten Endschaltung zugeordnete Kontaktpaar zur Umschaltung auf Test anschliessbar ist, und wobei die Reserveeinrichtung über ihr Kontaktpaar an die Anschlusstestschiene (BJ) anschliessbar ist, dadurch gekennzeichnet, dass die Reserveeinrichtung eine Reserveeinheit von Teilnehmerendschaltungen (TUS) für eine gewisse Anzahl von Teilnehmerendschaltungseinheiten (TU1 bis TUp), die Relais zur Umschaltung auf Test mit Kontaktpaaren (re1s bis re8s) enthält, und einen Isolierkreis (I) aufweist, der an die Leitungstestschiene (BL), die Anschlusstestschiene (BJ) und an die Kontaktpaare der Teilnehmerendschaltungseinheiten und der Reserveeinheit von Teilnehmerendschaltungen angeschlossen ist und die Verbindung einerseits zwischen der Reserveeinheit (TUS) von Teilnehmerendschaltungen und entweder den beiden Testschienen (BL, BJ) oder den Teilnehmerleitungen einer gestörten Einheit von Teilnehmerendschaltungen und andererseits zwischen den Endschaltungseinheiten und den beiden Testschienen ermöglicht.

2. Einrichtung nach Anspruch 1, dadurch gekennzeichnet, dass sie einen Steuerschaltkreis (CS) aufweist, der von den Endschaltungseinheiten unabhängig ist und das Relais (RE1) für die Umschaltung einer beliebigen gestörten Endschaltung auf Testbetrieb versorgen kann.

3. Einrichtung nach Anspruch 2, dadurch gekennzeichnet, dass der Steuerschaltkreis (CS) für jede Endschaltungseinheit eine Steuerverbindung (C1 bis Cp) aufweist, mit der gleichzeitig alle Relais (RE1) für die Umschaltung einer Endschaltungseinheit auf Testbetrieb versorgt werden, um alle an diese Endschaltungseinheit angeschlossenen Leitungen auf die Reserve-Endschaltungseinheit (TUS) umzuschalten.

4. Einrichtung nach Anspruch 1, dadurch gekennzeichnet, dass im Ruhestand der Isolierkreis (I) die Endschaltung der Reserve-Endschaltungseinheit mit zwei Arbeitskontakten eines Kontaktpaares (a) das Relais für die Umschaltung der Endschaltungen der Endschaltungseinheiten auf Testbetrieb verbindet, wobei die Schaltstellung des Isolierkreises (I) von einer Testgruppe (ES) umgesteuert wird.

5. Einrichtung nach Anspruch 2, dadurch gekennzeichnet, dass jedes Relais (RE1 bis RE8) zur Umschaltung auf Testbetrieb über eine ODER-Schaltung (01 bis 08) versorgt wird, das über einen Eingang ein von der Endschaltungseinheit ausgesandtes Steuersignal zur Umschaltung auf Testbetrieb und über einen zweiten Eingang ein Steuersignal vom Steuerschaltkreis (CS) zugeführt erhält zum Umsteuern auf die Reserve-Endschaltungseinheit.

6. Einrichtung nach Anspruch 1, in der die Endschaltungseinheiten in Gruppen von Endschaltungseinheiten (GA1 bis GAn) organisiert sind, dadurch gekennzeichnet, dass jede Gruppe eine Reserve-Endschaltungseinheit (TUS) und einen Steuerschaltkreis (CS) aufweist.

7. Einrichtung nach Anspruch 6, in der eine Testgruppe einen Leitungstestautomaten (REL), einen Anschlusstestautomaten (REJ) und ein Steuerorgan (MPE) enthält, dadurch gekennzeichnet, dass für jede Gruppe von Endschaltungseinheiten (GA1 bis GAn) ein Isolierkreis (I1 bis In) vorgesehen ist, wobei alle Isolierkreise vom Steuerorgan (MPE) gesteuert werden.

**Claims**

1. An emergency subscriber terminal device incorporated in a system in which the terminals (T1 to T8) are arranged in units of terminals and are connected to the subscriber lines via pairs of contacts (re1 to re8) of test switch-over relays (RE1 to RE8), those pairs of contacts allowing further the connection of the subscriber lines to a line test bus (BL) and the connection of the terminals to a junctor test bus (BJ), an emergency device comprising one pair of contacts (re1s) and being connectable to a subscriber line the terminal of which is defective, through the line test bus (BL) and the pair of contacts for switching over to the test, pair which is associated to the defective terminal, the emergency device being connectable through its pair of contacts to the junctor test bus (BJ), characterized in that the emergency device comprises an emergency unit of terminals (TUS) for a certain number of units of terminals (TU1 to TUp), the emergency unit including relays for switching-over to the tests, these relays comprising pairs of contacts (re1s to re8s), and an insulation circuit (I) which is connected to the line test bus (BL), to the junctor test bus (BJ) and to the pairs of contacts of the units of terminals and of the emergency unit of terminals and which is able to connect on the one hand the emergency unit of terminals (TUS) either to the line test bus (BL) and the junctor test bus (BJ) or to the subscriber lines of a defective unit of terminals and on the other hand the units of terminals to the line test bus and the junctor test bus.

2. A device according to claim 1, characterized in that it comprises a control circuit (CS) which is independent from the units of terminals and which is capable to feed the relay for switching-over to the tests (RE1) of any of the terminals found to be defective.

3. A device according to claim 2, characterized in that the control circuit (CS) has a control line (C1 to Cp) for each unit of terminals, allowing to feed simultaneousyl all the relays for switching-over to the tests (RE1) of one unit of terminals in order to switch all the lines connected to said unit of terminals over to the emergency unit of terminals (TUS).

4. A device according to claim 1, characterized in that, in the rest state, the insulation circuit (I) connects the terminals of the emergency unit of terminals to two active contacts of a pair of contacts (a) belonging to the relays for switching over to the tests (RE1S to RE8S) of the terminals of the units, the change of switching state of the insulation circuit (I) being controlled by a test assembly (ES).

5. A device according to claim 2, characterized in that all the relays for switching over to the tests (RE1 to RE8) are energized through an OR circuit (01 to 08) which receives through one input a control signal emitted by the unit of terminals for switching over to the tests, and through a second input a control signal coming from the control circuit (CS) for switching over to the emergency unit of terminals.

6. A device according to claim 1, in which the units of terminals are arranged in groups of units (GA1 to GAn), characterized in that each group includes an emergency unit of terminals (TUS) and a control circuit (CS).

7. A device according to claim 6, in which a test assembly (ES) comprises a line test robot (REL), a junctor test robot (REJ) and a control organ (MPE), characterized in that it comprises for each group of units of terminals (GA1 to GAn) an insulation circuit (I), all these circuits being controlled by the control organ (MPE).

# FIG.1

# FIG.2

# FIG.3